# EUROPÄISCHE PATENTSCHRIFT

(11) **EP 2 160 434 B1**
(45) Veröffentlichungstag und Bekanntmachung des Hinweises auf die Patenterteilung: **05.10.2011**
(21) Anmeldenummer: 08773576.7
(22) Anmeldetag: 23.06.2008
(51) Int. Cl.: C08J 3/03

(54) **HARZDISPERSION**
RESIN DISPERSION
DISPERSION DE RÉSINE

(30) Priorität: 25.06.2007 DE 102007029531
(43) Veröffentlichungstag der Anmeldung: 10.03.2010
(73) Patentinhaber: Momentive Specialty Chemicals GmbH, 58642 Iserlohn-Letmathe (DE)
(72) Erfinder: KUHLMANN, Gunda, 59077 Hamm (DE); BLÖTZ, Andreas, 58642 Iserlohn (DE); ROMAHN, Carsten, 58642 Iserlohn (DE); SCHWAB, Michael, 58640 Iserlohn (DE)
(86) Internationale Anmeldenummer: PCT/EP2008/005033
(87) Internationale Veröffentlichungsnummer: WO 2009/000483

(56) Entgegenhaltungen:
- EP-A- 1 264 851
- WO-A-2007/118645
- JP-A- 58 027 716

## Beschreibung

Für die Herstellung von Imprägnierungen von Bauteilen werden Harzdispersionen verwendet, die bisher in der Regel aus wässrigen Resolen oder Acrylatdispersionen bestehen. So sind Dispersionen auf der Basis von Resolen mit Wasser verdünnbar, allerdings spalten diese beim Härten Formaldehyd ab, wodurch eine Fertigung nur in speziell dafür ausgelegten Anlagen durchgeführt werden kann. Acrylatdispersionen können ohne Emission von umweltschädlichen Substanzen gehärtet werden, jedoch weisen die gehärteten Produkte eine geringe Glasübergangstemperatur auf.

Dispersionen auf der Basis von Epoxidharzen und Novolaken sind aus dem Stand der Technik bekannt. So beschreibt die JP 58-027716 ein Verfahren zur Herstellung einer Phenolharz/Novolak-Dispersion und einem Amin (insbesondere Imidazol) als Härter für ein Epoxidharz. Weiterhin ist aus der US RE37,023 eine Dispersion aus Resol und einem veretherten BPA-harz bekannt, wobei auch Lösungsmittel verwendet wird.

Weiterhin sind aus der WO 2007/118645 wässrige Harzdispersionen bekannt, die folgende Bestandteile enthalten: 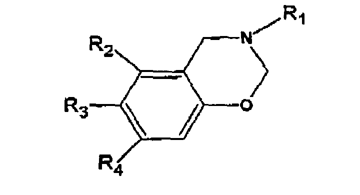 wobei
R₁ : unsubstituierter ein- oder mehrkerniger aromatischer Rest oder
mit Aminogruppen und/oder Cyanogruppen und/oder Nitrilgruppen und/oder mit gesättigten und/oder ungesättigten aliphatischen C₂ bis C₁₂ -Kohlenstoffketten substituierter ein- oder mehrkerniger aromatischer Rest;
R₂, R₃ und R₄: Wasserstoff, Alkylreste mit bis zu 15 C-Atomen oder aromatischer Rest, wobei R₂, R₃ und R₄ gleich oder verschieden von einander sein können,
ein Codispersionsmittel auf der Basis von Epoxidharzen und/oder Novolakharzen und ein Tensid.

Die Aufgabe der hier vorliegenden Erfindung besteht darin, Harzdispersionen bereitzustellen, bei deren Verarbeitung die Freisetzung von umweltbelastenden Stoffen vermieden wird.

Gelöst wird diese Aufgabe erfindungsgemäß durch die Merkmale des Anspruchs 1.

Als Epoxidharz des Bestandteils (I) können alle Epoxidharze mit mindestens zwei Epoxidgruppen pro Molekül eingesetzt werden, deren Schmelzbereich bevorzugt unter 90°C liegt. Bei Verwendung von Epoxidharzen mit einem höheren Schmelzbereich können sich verfahrenstechnische Schwierigkeiten aufgrund der erhöhten Viskosität des verwendeten Epoxidharzes ergeben. Bevorzugt sind wiederum Epoxidverbindungen, die bei Raumtemperatur flüssig sind, wie Diglycidylether von Bisphenolen oder vorverlängerte Harze auf Basis von Bisphenol-A-Diglycidylethern. Insbesondere bevorzugt sind niedrigviskose Harze wie Epoxidharze auf Basis von Cycloolefinen oder Tetraglycidyldianilin oder aber auch Mischungen fester Epoxidharze wie z.B. epoxidierter Novolake mit sogenannten Reaktiwerdünnern. Die Epoxidharze können gegebenenfalls mit anderen Polymeren wie z.B. Polyestern, Acrylate, Siliconpolymeren oder Polyvinylderivaten modifiziert sein.

Als Novolak des Bestandteils (I) kommen im sauren Milieu hergestellte Copolymerisate von phenolischen Verbindungen und einem Aldehyd zum Einsatz, bei deren Herstellung das Verhältnis von phenolischer Verbindung : Aldehyd bevorzugt von 1 : 0,4 bis 1: 0,8 beträgt. Diese Copolymerisate lassen sich monomerfrei herstellen. Bei einem Verhältnis größer 1:0,8 ist der entstandene Novolak zu hochviskos und kleiner 1 : 0,4 sind die Harze zu wasserlöslich und somit schlechter zu dispergieren.

Als phenolische Verbindungen können ein oder mehrkernige Phenole oder Gemische der genannten Verbindungsklasse eingesetzt werden und zwar sowohl ein- oder mehrkernige Phenole. Beispiele hierfür sind das Phenol selbst als bevorzugte Variante, sowie dessen alkylsubstituierte Homologe, wie o-, m-oder p-Kresol, Xylole oder höher alkylierte Phenole, außerdem halogensubstituierte Phenole, wie Chlor-, Bromphenol und mehrwertige Phenole wie Resorcin oder Brenzkatechin, sowie mehrkernige Phenole wie Naphthole, Bisphenol A oder Bisphenol F.

Das Phenol bzw. die phenolische Komponente wird mit Aldehyd, insbesondere Formaldehyd oder einer Formaldehyd abspaltenden Verbindung zu dem gewünschten Novolak umgesetzt. Die Novolake können durch übliche Modifizierungsmittel, wie z.B. Epoxidharze, Kautschuke, Polyvinylbutyral und anorganische Zusätze modifiziert sein.

Die Menge an Epoxidharz beträgt 30 bis 100 Gewichtsprozent und an Novolak 70-0 Gewichtsprozent bezogen auf die Masse beider Harzkomponenten. Die Herstellung einer reinen Epoxidharzdispersion hat den Vorteil, dass diese bedarfsgerecht zur Abmischung z.B. mit anderen Dispersionen bereitgestellt werden kann. Bevorzugt sind allerdings Harzdispersionen mit 30 bis 80Gewichtsprozent Epoxidharz, da der Novolak als Härter für das Epoxidharz wirkt und somit kein zusätzlicher Härter erforderlich ist. Wiederum bevorzugt sind 50 bis 80 Gewichtsprozent Epoxidharz, wodurch ein Optimum an Netzwerkdichte erzielt wird.

Als weiteren Bestandteil (II) enthält die erfindungsgemäße wässrige Harzdispersion 4 bis 18, bevorzugt 3 bis 10, Gewichtsprozent bezogen auf die Gesamtmasse eines Codispersionsmittels auf der Basis von Rizinusölethoxylat, hydriertes Rizinusölethoxylat, Alkylphenolethoxylat, Fettalkoholethoxylat, Ölsäureethoxylat, Oxoalkoholethoxylat, Fettalkoholalkoxylat und/oder Polyvinylalkohols. Kleiner 4 Gew.% an Codispersionsmittel zeigen keine ausreichende Wirkung und bei größer 18 Gew.% werden die Endeigenschaften, wie z.B. die Wasserlöslichkeit des gehärteten Produkts verschlechtert.

Besonders bevorzugt ist, wenn Polyvinylalkohol verwendet wird, das es sowohl als Emulgator als auch als Schutzkolloid wirkt. Wiederum bevorzugt ist, wenn Polyvinylalkohol einen Hydrolysegrad von 80 bis 95 % und ein Molekulargewicht von 30 000 bis 70 000 g/mol aufweist, was sich positiv auf die Stabilität der Emulsion auswirkt.

Weiterhin kann die erfindungsgemäße Harzdispersion als weiteren Bestandteil zumindest einen Stabilisator - bevorzugt in einer Konzentration von 0,2 bis 2 Gew.% bezogen auf die Masse der Gesamtmischung - auf der Basis von hochmolekularen Alkoholen oder aber auch Cellulosederivaten, Stärke, Dextrin, Polyacrylsäure und/oder deren -copolymeren Salzen, Poly-N-vinylmethylacetamid, Vinylpyrrolidon-Copolymerisate und/oder Stimme Schutzkolloide enthalten. Die Stabilität der Dispersion wird somit erhöht. Besonders bevorzugt ist wiederum wenn der Stabilisator Methoxycellulose ist, da dieser Stabilisator bereits bei geringsten Konzentrationen wirkt.

Auch kann die erfindungsgemäße Harzdispersion weitere Bestandteile wie Substanzen die die Härtungsreaktion beschleunigen wie z.B. Lewis-Säuren oder Imidazole in einer Menge von 0 bis 1,5 Gew% bezogen auf die Masse der gesamten Mischung enthalten. Von Vorteil sind wiederum Imidazole, die abgesehen von der beschleunigenden Wirkung auch noch eine hohe Stabilität der beschleunigten Dispersion von mehreren Stunden bis Tagen gewährleisten.

Weiterhin kann die erfindungsgemäße Harzdispersion Verarbeitungshilfsmittel in einer Konzentration bevorzugt von 0,05 bis 3 Gew.% bezogen auf die Masse der gesamten Mischung wie Verlaufsmittel zur Verbesserung der Filmbildung oder aber auch Substanzen zur Einstellung von speziellen Eigenschaften wie z. B. Acrylatdispersionen zur Erhöhung der Flexibilität enthalten. Beispielhaft sei die Verwendung von Ethylenglycol und/oder Polydimethylsiloxan genannt. Auch ist die Zugabe von Farbstoffen, Benetzungsmittel und Katalysatoren als weitere Zusatzstoffe denkbar.

Die erfindungsgemäße Harzdispersion hat bevorzugt eine Feststoffkonzentration von 30-50 %. Es sind aber auch - je nach Anwendungsgebiet - geringere Feststoffkonzentrationen (ca. 10 %) möglich.

Die Herstellung der erfindungsgemäßen Harzdispersion auf der Basis von Epoxidharzen und Novolakharzen sowie weiteren Zusatzstoffen kann durch ein Verfahren erfolgen, folgende Schritte enthaltend:
a. Vermischen zumindest des Codispersionsmittel zu dem im wesentlichen in der Schmelze befindlichen Bestandteil (I) und
b. Vermischen von Wasser und gegebenenfalls weiteren Zusatzstoffen bei Temperaturen < 100 °C zu der im Schritt a) erhaltenen Mischung.

Bevorzugt wird der Bestandteil (I) bei Temperaturen zwischen 90 und 150 °C, bevorzugt bis 125 °C, damit eine vorzeitige Reaktion der Komponenten sicher ausgeschlossen werden kann, aufgeschmolzen. Dieser Temperaturbereich ist auch aus Viskositätsgründen günstig, damit eine homogene Mischung des Bestandteils (I) erreicht wird. Das Codispersionsmittel wird zugegeben und die Mischung auf < 100 °C gekühlt. Anschließend erfolgt die Wasserzugabe, bevorzugt 25 % - 50 % bezogen auf die Gesamtmasse. Unter Rühren und Kühlen erfolgt gegebenenfalls weitere Wasserzugabe. Der Festharzgehalt beträgt bevorzugt 30 bis 50 %.

Generell ist es unerheblich in welcher Reihenfolge und mit welcher Temperatur das Codispersionsmittel und der Bestandteil (I) bzw. Wasser mit den anderen Zusatzstoffen miteinander vermischt werden.

Besonders bevorzugt ist, wenn im Schritt b) der Stabilisator zugegeben wird, wodurch die Verwendung von temperaturempfindlichen Stabilisatoren möglich ist.

Von Vorteil ist weiterhin, wenn nach Erhalt der Mischung im Schritt b) der Harzdispersion noch weitere Zusatzstoffe wie Katalysatoren, Farbstoffe und Benetzungsmittel zugemischt werden.

Es ist aber auch möglich, wenn die Herstellung der erfindungsgemäßen wässrigen Harzdispersion auf der Basis von Epoxidharzen und Novolakharzen sowie weiteren Zusatzstoffen in der Art erfolgt, dass die Bestandteile (I), (II) und (III) der Harzdispersion und Wasser mittels Einbringung von Scherenergie miteinander vermischt werden. Dadurch kann auf die Erhitzung der Bestandteile verzichtet werden und die damit verbundenen Probleme hinsichtlich der Handhabung vermieden werden.
Für dieses Verfahren, durchgeführt z.B. in Dispersionsmühlen oder Turboinnenmischern, wird Wasser vorgelegt und das Codispersionsmittel und gegebenenfalls weitere Zusatzstoffe zugegeben. Unter Rühren werden dann das Epoxidharz und der Novolak zugegeben und Scherenergie in ausreichendem Maße eingebracht.

Die unvernetzte erfindungsgemäße wässrige Harzdispersion kann auf textilen, mineralischen, metallischen oder aber auch Kunststoffoberflächen in Form von Fasern, Vliesen, Geweben, Wollen oder glatten Oberflächen einfach und unkompliziert z. B durch Streichen, Sprühen oder Rakeln aufgebracht werden, wodurch diese dann modifiziert werden. Es können sich Trocknungsprozesse anschließen. Während und auch nach der Vernetzung wird kein Formaldehyd oder anderes Lösungsmittel frei, was umwelt- bzw. geruchsbelästigend wäre. Das Anwendungsgebiet wasserlöslicher Resole und Acrylate kann nunmehr von der erfindungsgemäßen Harzdispersion abgedeckt werden.

Anhand eines Ausführungsbeispiels soll die Erfindung näher erläutert werden:
In einem 21 Kolben ausgestattet mit Rührer, Thermometer, Tropftrichter und Heizpilz werden 120 g Novolak und 280 g Epoxidharz innerhalb von 60 min auf ca. 110 °C erhitzt. 290 g einer 23,5 prozentigen Lösung von Polyvinylalkohol in Wasser wird dann innerhalb von 30 Minuten unter Rühren zugegeben. Die Temperatur wird dabei auf ca. 75-85 °C gehalten.
Anschließend werden 310 g Wasser unter Rühren bei ca. 75-85 °C innerhalb von 90 min zudosiert. Die gebildete Dispersion wird langsam auf ca. 40°C abgekühlt. Die Dispersion hat eine Viskosität bei 20°C von 5080 mPas und einen Feststoffgehalt von ca. 47,6%.

## Patentansprüche

1. Wässrige Harzdispersion auf der Basis von Epoxidharzen und Novolakharzen sowie weiteren Zusatzstoffen, **dadurch gekennzeichnet, dass** die Harzdispersion
(I) 30 bis 100 Gewichtsprozent Epoxidharz und 0-70 Gewichtsprozent Novolakharz bezogen auf die Masse beider Harzkomponenten sowie
(II) 4 bis 18 Gewichtsprozent bezogen auf die Gesamtmasse eines Codispersionsmittels auf der Basis von Rizinusölethoxylat, hydriertes Rizinusölethoxylat, Alkylphenolethoxylat, Fettalkoholethoxylat, Ölsäureethoxylat, Oxoalkoholethoxylat, Fettalkoholalkoxylat und/oder Polyvinylalkohols und
(III) gegebenenfalls 0 bis 20 Gewichtsprozent bezogen auf die Gesamtmasse weitere übliche Zusatzstoffe enthält,
wobei die Verwendung von 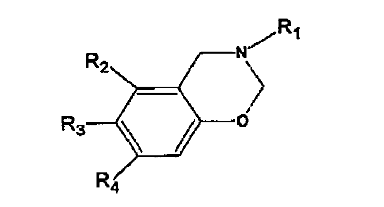 wobei
R₁ :
unsubstituierter ein- oder mehrkerniger aromatischer Rest oder mit Aminogruppen und/oder Cyanogruppen und/oder Nitrilgruppen und/oder mit gesättigten und/oder ungesättigten aliphatischen C₂ bis C₁₂ -Kohlenstoffketten substituierter ein- oder mehrkerniger aromatischer Rest
R₂, R₃ und R₄: Wasserstoff, Alkylreste mit bis zu 15 C-Atomen oder aromatischer Rest, wobei R₂, R₃ und R₄ gleich oder verschieden von einander sein können,
ausgeschlossen ist.

2. Wässrige Harzdispersion auf der Basis von Epoxidharzen und Novolakharzen sowie weiteren Zusatzstoffen nach Anspruch 1, **dadurch gekennzeichnet, dass** die Harzdispersion
(I) 30 bis 80 Gewichtsprozent Epoxidharz und 70-20 Gewichtsprozent Novolakharz bezogen auf die Masse beider Harzkomponenten sowie
(II) 4 bis 18 Gewichtsprozent bezogen auf die Gesamtmasse eines Codispersionsmittels auf der Basis von Rizinusölethoxylat, hydriertes Rizinusölethoxylat, Alkylphenolethoxylat, Fettalkoholethoxylat, Ölsäureethoxylat, Oxoalkoholethoxylat, Fettalkoholalkoxylat und/oder Polyvinylalkohols und
(III) gegebenenfalls 0 bis 20 Gewichtsprozent bezogen auf die Gesamtmasse weitere übliche Zusatzstoffe enthält.

3. Harzdispersion nach zumindest einem der vorhergehenden Ansprüche, **dadurch gekennzeichnet**, das der Schmelzbereich des Epoxidhazes < 90 °C beträgt.

4. Harzdispersion nach zumindest einem der vorhergehenden Ansprüche, **dadurch gekennzeichnet, dass** das Novolakharz ein Phenol-Formaldehydharz ist, bei dessen Herstellung das Verhältnis von Phenol : Formaldehyd von 1 : 0,4 bis 1: 0,8 beträgt.

5. Harzdispersion nach zumindest einem der vorhergehenden Ansprüche, **dadurch gekennzeichnet, dass** die Menge an Codispersionsmittel 4 bis 10 Gew.% bezogen auf die gesamte Masse beträgt.

6. Harzdispersion nach zumindest einem der vorhergehenden Ansprüche, **dadurch gekennzeichnet, dass** als weiterer Zusatzstoff ein Stabilisator enthalten ist.

7. Harzdispersion nach zumindest einem der vorhergehenden Ansprüche, **dadurch gekennzeichnet, dass** als weiterer Zusatzstoff ein Katalysator, Farbstoffe oder Benetzungsmittel enthalten sind.

8. Verfahren zur Herstellung einer wässrigen Harzdispersion auf der Basis von Epoxidharzen und Novolakharzen sowie weiteren Zusatzstoffen, folgende Schritte enthaltend:
a) Vermischen zumindest des Codispersionsmttels zu dem im Wesentlichen in der Schmelze befindlichen 30 bis 100 Gewichtsprozent Epoxidharz und 0-70 Gewichtsprozent Novolakharz bezogen auf die Masse beider Harzkomponenten und
b) Vermischen von Wasser und gegebenenfalls weiteren Zusatzstoffen bei Temperaturen < 100 °C zur der im Schritt a) erhaltenen Mischung.

9. Verfahren nach Anspruch 8, **dadurch gekennzeichnet, dass** im Schritt b) als Zusatzstoff ein Stabilisator zugegeben wird.

10. Verfahren nach Anspruch 8 und/oder 9, **dadurch gekennzeichnet, dass** nach Erhalt der Mischung im Schritt b) der Harzdispersion noch weitere Zusatzstoffe zugemischt werden.

11. Verfahren zur Herstellung einer wässrigen Harzdispersion auf der Basis von Epoxidharzen und Novolakharzen sowie weiteren Zusatzstoffen, **dadurch gekennzeichnet, dass**
**(I) 30 bis 100 Gewichtsprozent Epoxidharz und 0-70 Gewichtsprozent Novolakharz bezogen auf die Masse beider Harzkomponenten sowie**
**(II) 4 bis 18 Gewichtsprozent bezogen auf die Gesamtmasse eines Codispersionsmittels auf der Basis von Rizinusölethoxylat, hydriertes Rizinusölethoxylat, Alkylphenolethoxylat, Fettalkoholethoxylat, Ölsäureethoxylat, Oxoalkoholethoxylat, Fettalkoholalkoxylat und/oder Polyvinylalkohols und**
**(III) gegebenenfalls 0 bis 20 Gewichtsprozent bezogen auf die Gesamtmasse weitere übliche Zusatzstoffe,**
und Wasser mittels Einbringung von Scherenergie miteinander vermischt werden.

12. Produkt das eine unvernetzte oder vernetzte Oberflächenschicht aufweist, die durch Aufbringung der Harzdispersion nach zumindest einem der vorhergehenden Ansprüche hergestellt worden ist.

13. Verwendung der wässrigen Harzdispersion nach zumindest einem der Ansprüche 1 bis 7 zur Modifikation von textilen, mineralischen, metallischen oder Kunststoffoberflächen in Form von Fasern, Vliesen, Geweben, Wollen oder glatten Oberflächen.

## Claims

1. Aqueous resin dispersion based on epoxy resins and novolak resins and also further added substances, **characterized in that** the resin dispersion contains
(I) 30 to 100 weight percent of epoxy resin and 0-70 weight percent of novolak resin based on the mass of both resin components and also
(II) 4 to 18 weight percent based on the overall mass of a codispersant based on castor oil ethoxylate, hydrogenated castor oil ethoxylate, alkylphenol ethoxylate, fatty alcohol ethoxylate, oleic acid ethoxylate, oxo process alcohol ethoxylate, fatty alcohol alkoxylate and/or polyvinyl alcohol and
(III) optionally 0 to 20 weight percent based on the overall mass of further customary added substances,
with the exception of the use of 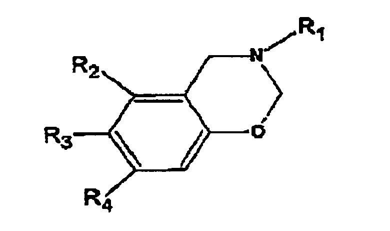 where
R₁ is unsubstituted mono- or polycyclic aromatic radical or is mono- or polycyclic aromatic radical substituted by amino groups and/or cyano groups and/or nitrile groups and/or by saturated and/or unsaturated aliphatic C₂ to C₁₂ carbon chains
R₂, R₃ and R₄ are hydrogen, alkyl radicals having up to 15 C atoms, or aromatic radical, it being possible for R₂, R₃ and R₄ to be identical to or different from one another.

2. Aqueous resin dispersion based on epoxy resins and novolak resins and also further added substances according to Claim 1, **characterized in that** the resin dispersion contains
(I) 30 to 80 weight percent of epoxy resin and 70-20 weight percent of novolak resin based on the mass of both resin components and also
(II) 4 to 18 weight percent based on the overall mass of a codispersant based on castor oil ethoxylate, hydrogenated castor oil ethoxylate, alkylphenol ethoxylate, fatty alcohol ethoxylate, oleic acid ethoxylate, oxo process alcohol ethoxylate, fatty alcohol alkoxylate and/or polyvinyl alcohol and
(III) optionally 0 to 20 weight percent based on the overall mass of further customary added substances.

3. Resin dispersion according to at least one of the preceding claims, **characterized in that** the melting range of the epoxy resin is < 90°C.

4. Resin dispersion according to at least one of the preceding claims, **characterized in that** the novolak resin is a phenol-formaldehyde resin prepared using a phenol:formaldehyde ratio in the range from 1:0.4 to 1:0.8.

5. Resin dispersion according to at least one of the preceding claims, **characterized in that** the amount of codispersant is in the range from 4% to 10% by weight based on the overall mass.

6. Resin dispersion according to at least one of the preceding claims, **characterized in that** a stabilizer is present as a further added substance.

7. Resin dispersion according to at least one of the preceding claims, **characterized in that** a catalyst, dyes or wetting agents are present as a further added substance.

8. Process for producing an aqueous resin dispersion based on epoxy resins and novolak resins and also further added substances, comprising the following steps:
a) admixing at least the codispersant to the 30 to 100 weight percent of epoxy resin and 0-70 weight percent of novolak resin based on the mass of both resin components, present essentially in the melt, and
b) admixing water and optionally further added substances at temperatures < 100°C to the mixture obtained in step a).

9. Process according to Claim 8, **characterized in that** the stabilizer is added as added substance in step b).

10. Process according to Claim 8 and/or 9, **characterized in that** after obtaining the mixture in step b) the resin dispersion is admixed with still further added substances.

11. Process for producing an aqueous resin dispersion based on epoxy resins and novolak resins and also further added substances, **characterized in that**
(I) 30 to 100 weight percent of epoxy resin and 0-70 weight percent of novolak resin based on the mass of both resin components and also
(II) 4 to 18 weight percent based on the overall mass of a codispersant based on castor oil ethoxylate, hydrogenated castor oil ethoxylate, alkylphenol ethoxylate, fatty alcohol ethoxylate, oleic acid ethoxylate, oxo process alcohol ethoxylate, fatty alcohol alkoxylate and/or polyvinyl alcohol and
(III) optionally 0 to 20 weight percent based on the overall mass of further customary added substances,
and water are mixed together by introducing shearing energy.

12. Product having a crosslinked or uncrosslinked surficial layer produced by applying the resin dispersion according to at least one of the preceding claims.

13. Use of the aqueous resin dispersion according to at least one of Claims 1 to 7 for modifying textile, mineral, metallic or polymeric surfaces in the form of fibres, fibrous nonwoven webs, wovens, wools or smooth surfaces.

## Revendications

1. Dispersion aqueuse de résine à base de résines époxydes et de résines novolaques ainsi que d'autres additifs, **caractérisée en ce que** la dispersion de résine contient
(I) 30 à 100% en poids de résine époxyde et 0-70% en poids de résine novolaque par rapport à la masse des deux composants de résine, ainsi que
(II) 4 à 18% en poids, par rapport à la masse totale, d'un co-agent de dispersion à base d'éthoxylate d'huile de ricin, d'éthoxylate d'huile de ricin hydrogénée, d'éthoxylate d'alkylphénol, d'éthoxylate d'alcool gras, d'éthoxylate d'acide oléique, d'éthoxylate d'oxoalcool, d'alcoxylate d'alcool gras et/ou de poly(alcool vinylique) et
(III) le cas échéant 0 à 20% en poids par rapport à la masse totale d'autres additifs usuels,
où l'utilisation de 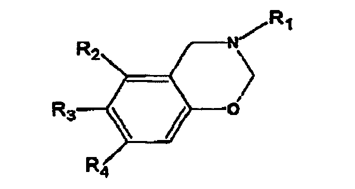 où
R₁ : un radical aromatique, à un ou plusieurs noyaux, non substitué ou un radical aromatique à un ou plusieurs noyaux substitué par des groupes amino et/ou des groupes cyano et/ou des groupes nitrile et/ou par des chaînes carbonées en C₂ à C₁₂ aliphatiques, saturées et/ou non saturées R₂, R₃ et R₄ : hydrogène, des radicaux alkyle comprenant jusqu'à 15 atomes de carbone ou un radical aromatique, où R₂, R₃ et R₄ peuvent être identiques ou différents les uns des autres,
est exclue.

2. Dispersion aqueuse de résine à base de résines époxydes et de résines novolaques, ainsi que d'autres additifs selon la revendication 1, **caractérisée en ce que** la dispersion de résine contient
(I) 30 à 80% en poids de résine époxyde et 70-20% en poids de résine novolaque par rapport à la masse des deux composants de résine, ainsi que
(II) 4 à 18% en poids, par rapport à la masse totale, d'un co-agent de dispersion à base d'éthoxylate d'huile de ricin, d'éthoxylate d'huile de ricin hydrogénée, d'éthoxylate d'alkylphénol, d'éthoxylate d'alcool gras, d'éthoxylate d'acide oléique, d'éthoxylate d'oxoalcool, d'alcoxylate d'alcool gras et/ou de poly(alcool vinylique) et
(III) le cas échéant 0 à 20% en poids par rapport à la masse totale d'autres additifs usuels.

3. Dispersion de résine selon au moins l'une quelconque des revendications précédentes, **caractérisée en ce que** la plage de fusion de la résine époxyde est < 90°C.

4. Dispersion de résine selon au moins l'une quelconque des revendications précédentes, **caractérisée en ce que** la résine novolaque est une résine de phénolformaldéhyde, lors de la préparation de laquelle le rapport phénol:formaldéhyde est de 1:0,4 à 1:0,8.

5. Dispersion de résine selon au moins l'une quelconque des revendications précédentes, **caractérisée en ce que** la quantité de co-agent de dispersion est de 4 à 10% en poids par rapport à la masse totale.

6. Dispersion de résine selon au moins l'une quelconque des revendications précédentes, **caractérisée en ce qu'**un stabilisateur est contenu comme autre additif.

7. Dispersion de résine selon au moins l'une quelconque des revendications précédentes, **caractérisée en ce qu'**un catalyseur, des colorants ou des mouillants sont contenus comme autre additif.

8. Procédé pour la préparation d'une dispersion aqueuse de résine à base de résines époxydes et de résines novolaques ainsi que d'autres additifs, contenant les étapes suivantes :
a) mélange au moins du co-agent de dispersion dans 30 à 100% en poids de résine époxyde et 0-70% en poids de résine novolaque, par rapport à la masse de deux composants de résine, se trouvant essentiellement en masse fondue et
b) mélange de l'eau et le cas échéant d'autres additifs à des températures < 100°C au mélange obtenu dans l'étape a).

9. Procédé selon la revendication 8, **caractérisé en ce que** dans l'étape b), on ajoute un stabilisateur comme additif.

10. Procédé selon la revendication 8 et/ou 9, **caractérisé en ce qu'**après l'obtention du mélange dans l'étape b), on ajoute encore d'autres additifs à la dispersion de résine.

11. Procédé pour la préparation d'une dispersion aqueuse de résine à base de résines époxydes et de résines novolaques ainsi que d'autres additifs, **caractérisé en ce que**
(I) 30 à 100% en poids de résine époxyde et 0-70% en poids de résine novolaque par rapport à la masse des deux composants de résine, ainsi que
(II) 4 à 18% en poids, par rapport à la masse totale, d'un co-agent de dispersion à base d'éthoxylate d'huile de ricin, d'éthoxylate d'huile de ricin hydrogénée, d'éthoxylate d'alkylphénol, d'éthoxylate d'alcool gras, d'éthoxylate d'acide oléique, d'éthoxylate d'oxoalcool, d'alcoxylate d'alcool gras et/ou de poly(alcool vinylique) et
(III) le cas échéant 0 à 20% en poids par rapport à la masse totale d'autres additifs usuels,
et de l'eau sont mélangés les uns avec les autres par introduction d'énergie de cisaillement.

12. Produit qui présente une couche superficielle non réticulée ou réticulée, qui a été produite par application de la dispersion de résine selon au moins l'une quelconque des revendications précédentes.

13. Utilisation de la dispersion aqueuse de résine selon au moins l'une quelconque des revendications 1 à 7 pour la modification de surfaces textiles, minérales, métalliques ou de matériau synthétique sous forme de fibres, de non-tissés, de tissus, de laines ou d'autres surfaces lisses.
